# EUROPEAN PATENT APPLICATION

(11) **EP 4 557 576 A1**
(43) Date of publication of application: **21.05.2025**
(21) Application number: 22765172.6
(22) Date of filing: 15.07.2022
(51) Int. Cl.: H02J 50/10, E05F 11/38

(54) **INDUCTIVELY COUPLED ELECTRIC CHARGING DEVICES**

(71) Applicant: Inertim Research S.L., 09004 Burgos (ES)
(72) Inventor: MARTÍNEZ MORAL, Francisco Javier, 09002 Burgos (ES); MARTINEZ FLORES, Víctor, 09004 Burgos (ES); RUIZ GONZÁLEZ, Bernardino, 09004 Burgos (ES)
(74) Representative: Herrero & Asociados, S.L.
(86) International application number: PCT/ES2022/070463
(87) International publication number: WO 2024/013410

(57) **Abstract**

Inductively coupled electric charging device (100) for a window lift system (1000) for vehicle doors, wherein the window lift system (1000) comprises an active system (1010) comprising an active glass window (1020), wherein the inductively coupled electric charging device (100) comprises a transmitter coil (110) comprising wiring (120) connectable to a current source of the vehicle, wherein the transmitter coil (110) is configured to be charged through said current source, a receiver coil (130) connectable to the active system (1010), wherein the inductively coupled electric charging device (100) is configured to actuate the active glass window (1020) by means of a current flow obtained by inductively coupling the transmitter coil (110) in the state of charge and the receiver coil (130), wherein the actuation of the active glass window (1020) causes the darkening of the active glass window (1020).

## Description

### Object of the invention

The object of the present invention relates to inductively coupled electric charging devices for window lift systems for vehicle doors and to window lift systems comprising said electric charging devices.

### Background of the invention

Automotive side glasses have traditionally been clear, or in some cases permanently tinted.

Recently, technological developments from other technical fields such as those of architecture or decoration have reached the automobile, as is the case with active glasses that darken on demand and by receiving a current flow.

Active glasses have started to make their way into the sunroof of vehicles. However, there are technical problems when it comes to inserting active glasses in the side doors of vehicles, since active glasses are actuated by a current flow and conventional glasses in side doors of vehicles are mobile and located on a window lift system that allows its movement (i.e. up and down). Therefore, the substitution of a conventional glass for an active glass in window lift systems, as well as applying said current flow poses complex technical difficulties.

The present invention proposes a solution that solves the previously mentioned technical drawbacks for the incorporation of active glasses in the side doors of vehicles.

### Description of the invention

The present invention obtains a solution to the technical problems associated with the implementation of active glasses in the doors of vehicles by means of an inductively coupled electric charging device that comprises a pair of inductive elements that allows electrical energy to be brought to the active glass window in a way that minimizes the problems to which a mobile element is subjected: noise, vibrations, humidity, direct water intake, dust, saline environment (corrosion), etc.

The present invention allows the glass to be activated when both elements (i.e. a pair of inductive elements) are opposite each other, usually when the glass is in the closed position.

Thus, in a first aspect, the present invention refers to an inductively coupled electric charging device for a window lift system for vehicle doors. The window lift system comprises an active system comprising an active glass window.

The inductively coupled electric charging device comprises a transmitter coil comprising wiring that can be connected to a current source of the vehicle, wherein the transmitter coil is configured to be charged through said current source. The inductively coupled electric charging device also comprises a receiver coil that can be connected to the active system.

The inductively coupled electric charging device is configured to actuate the active glass window by means of a current flow obtained by inductive coupling of the transmitter coil in the state of charge and the receiver coil. The actuation of the active glass window causes the darkening of the active glass window.

The inductively coupled electric charging device also comprises control electronics configured for transmitting energy between the transmitter coil and the receiver coil. The window lift system may comprise a drag car, and wherein the receiver coil is connectable to the drag car.

In the second example, the receiver coil is connectable to the active glass window of the active system.

The window lift system comprises a rail configured to allow the movement of the active glass window by means of the drag car, and wherein the transmitter coil is connectable to said rail.

In another example, the transmitter coil is connectable to a vehicle door.

In another example, the transmitter coil wiring may comprise a charging connector connectable to the energy source.

Another aspect of the invention relates to a window lift system for vehicle doors, wherein the window lift system comprises the inductively coupled electric charging device according to the first aspect of the invention. The active system comprises an active glass window, a drag car for the active glass window, and a rail on which said active glass window moves by means of the drag car.

In one example, the transmitter coil is connected to said rail. In another example, the transmitter coil is connected to the door of a vehicle.

In other examples, the receiver coil is connected to the active glass window drag car or directly to the active glass window of the active system.

### Description of the drawings

To complement the description that is being made and in order to help a better understanding of the characteristics of the inductively coupled electric charging devices and the window lift systems according to the present invention, a set of drawings is attached as an integral part of said description where, by way of illustration and not limitation, the following has been represented:
Figure 1 shows a window lift system comprising an inductively coupled electric charging device according to the present invention wherein the transmitter coil is located on the window lift system rail and wherein the receiver coil is located on the window lift system drag car.
Figure 2 shows a window lift system comprising an inductively coupled electric charging device according to the present invention wherein the transmitter coil is located on the rail of the window lift system and wherein the receiver coil is located on the active glass window.
Figures 3A and 3B show a window lift system comprising an inductively coupled electric charging device according to the present invention wherein the transmitter coil is located on the door of a vehicle and wherein the receiver coil is located on the drag car of the active glass window.

### Preferred embodiment of the invention

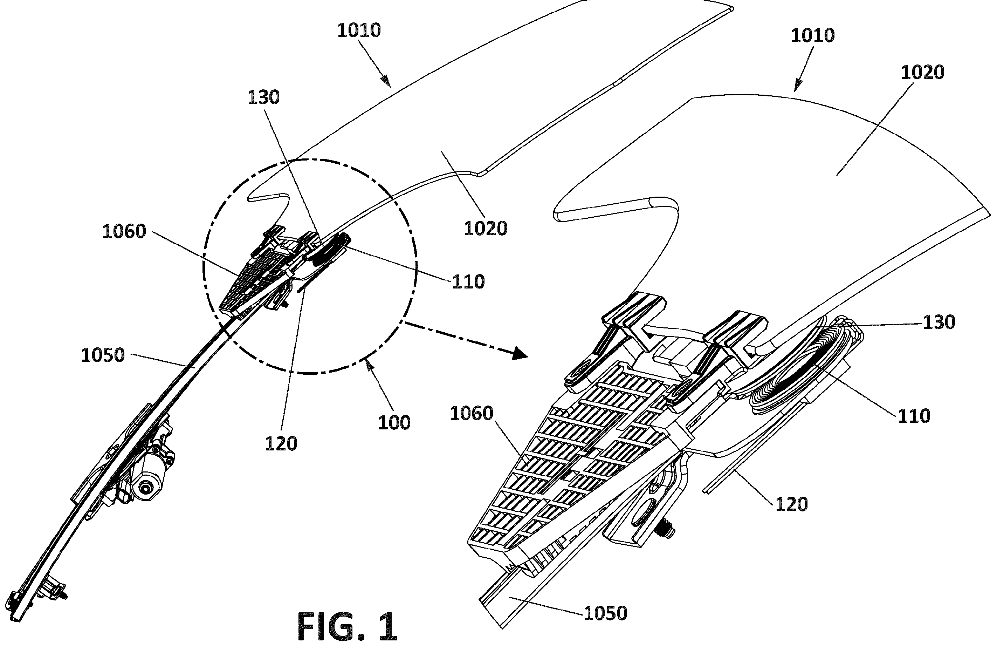

Figure 1 shows a first example of a window lift system (1000) comprising an inductively coupled electric charging device (100) according to the present invention. The window lift system (1000) comprises an active system (1010) comprising an active glass window (1020). The window lift system (1000) also comprises a rail (1050) and a drag car (1060).

As can be seen in the detailed view of Figure 1, the inductively coupled electric charging device (100) comprises a transmitter coil (110) comprising wiring (120) connectable to a current source of the vehicle (not shown in Figure 1). As can be seen in Figure 1, the transmitter coil (110) is connected to the rail (1050) of the window lift system (1000).

The transmitter coil (110) is configured to charge via the current source. The receiver coil (130) is connected to the drag car (1060) of the window lift system.

The inductively coupled electric charging device (100) is configured to actuate the active glass window (1020) by means of a current flow obtained by means of the inductive coupling of the transmitter coil (110) in the state of charge and the receiver coil (130), wherein the actuation of the active glass window (1020) causes the darkening of the active glass window (1020).

As can be seen in the detailed view, the transmitter coil (110) and the receiver coil (130) are facing each other to cause an inductive coupling that allows the generation of the electrical flow that acts on the active glass window (1020). Wiring (120) connectable to a vehicle current source (not shown in Figure 1) is also seen.

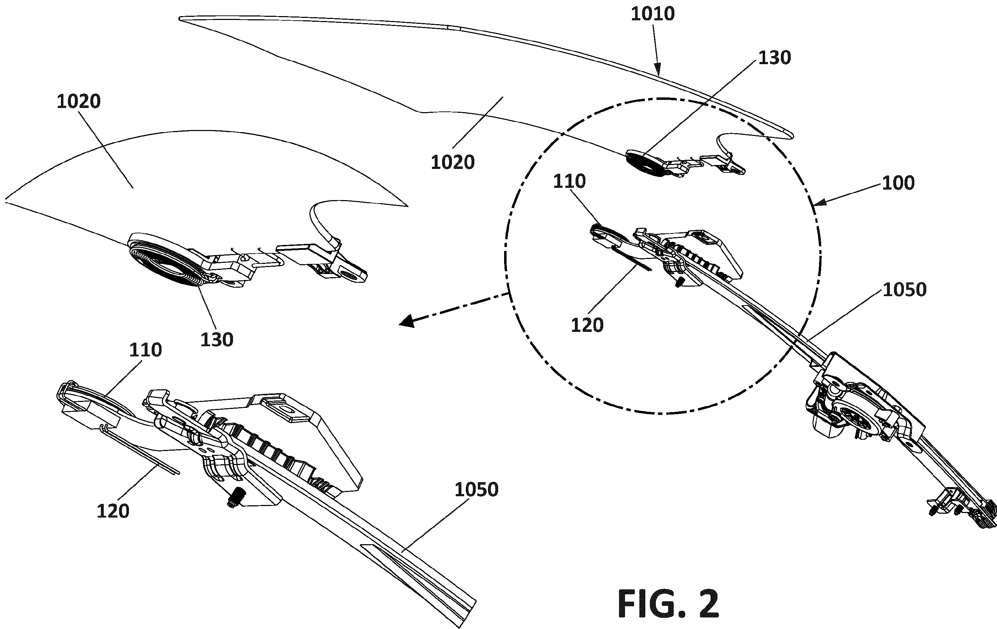

Figure 2 shows a second example of a window lift system (1000) comprising an inductively coupled electric charging device (100) according to the present invention. In this particular example, the receiver coil (130) is connected to the active glass window (1020) of the active system (1010) and the transmitter coil (110) is connected to the rail (1050) of the window lift system (1000).

In the detailed view of Figure 2, the receiver coil (130) connected to the active glass window (1020) of the active system (1010) and the transmitter coil (110) connected to the rail (1050) of the window lift system (1000) can be seen, as well as the active glass window (1020) of the window lift system (1000).

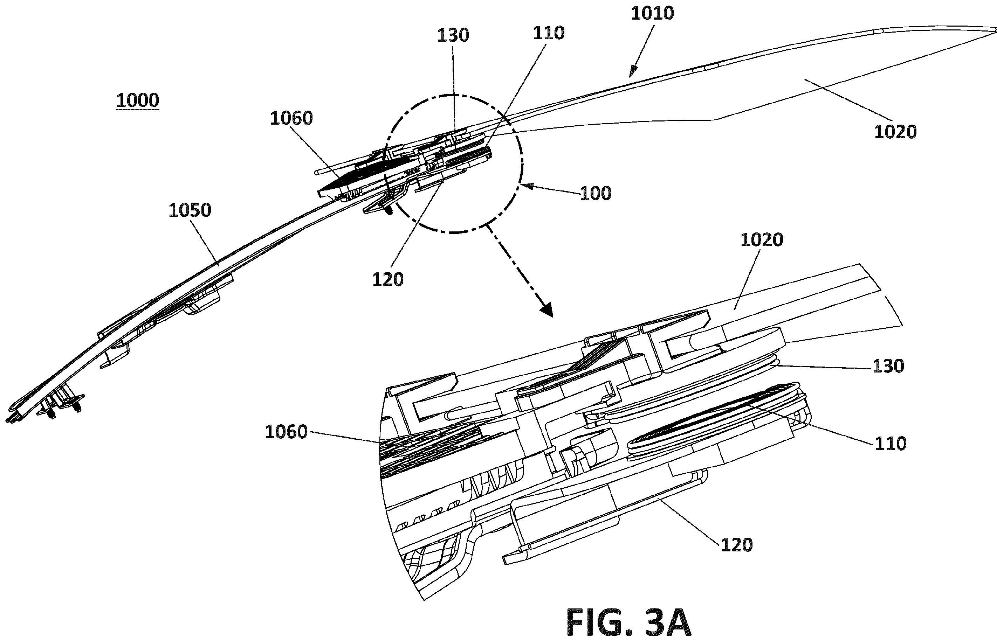

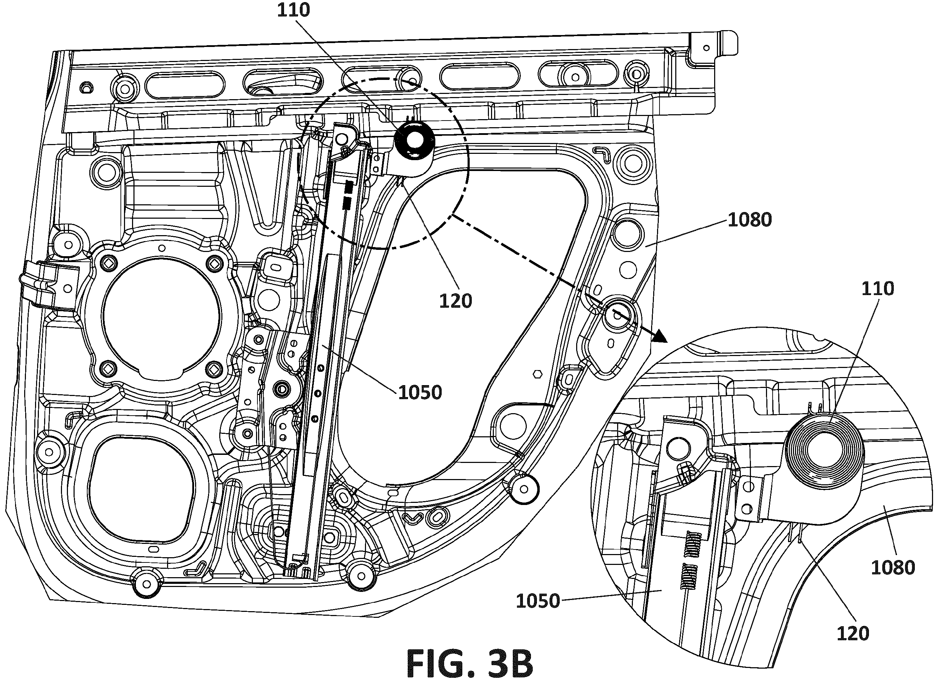

Figure 3A shows a third example of a window lift system (1000) comprising an inductively coupled electric charging device (100) according to the present invention. As shown in the detailed view of Figure 3A, in this particular example, the receiver coil (130) is connected to the drag car (1060) of the window lift system (1000) and facing the transmitter coil (110), which is connected (or connectable) to the door (1080) of a vehicle. Said door (1080) is shown in Figure 3B, wherein the rail (1050) of the window lift system can also be seen.

## Claims

1. Inductively coupled electric charging device (100) for a window lift system (1000) for vehicle doors, wherein the window lift system (1000) comprises an active system (1010) comprising an active glass window (1020), wherein the inductively coupled electric charging device (100) comprises:
- a transmitter coil (110) comprising wiring (120) connectable to a current source of the vehicle, wherein the transmitter coil (110) is configured to charge via said current source,
- a receiver coil (130) connectable to the active system (1010);
- wherein the inductively coupled electric charging device (100) is configured to actuate the active glass window (1020) by means of a current flow obtained by inductive coupling of the transmitter coil (110) in the state of charge and the receiver coil (130),
- wherein the actuation of the active glass window (1020) causes the darkening of the active glass window (1020).

2. Inductively coupled electric charging device (100) according to claim 1, further comprising control electronics configured for transmitting energy between the transmitter coil (110) and the receiver coil (130).

3. Inductively coupled electric charging device (100) according to claims 1 or 2, wherein the window lift system (1000) also comprises a drag car (1060), and wherein the receiver coil (130) is configured to be connectable to the drag car (1060).

4. Inductively coupled electric charging device (100) according to claims 1 or 2, wherein the receiver coil (130) is configured to be connectable to the active glass window (1020) of the active system (1010).

5. Inductively coupled electric charging device (100) according to claims 3 or 4, wherein the window lift system (1000) comprises a rail (1050) configured to allow the movement of the active glass window (1020) by means of the drag car (1060), and wherein the transmitter coil (110) is configured to be connectable to said rail (1050).

6. Inductively coupled electric charging device (100) according to claims 1 to 4, wherein the transmitter coil (110) is configured to be connectable to a door (1080) of a vehicle.

7. Inductively coupled electric charging device (100) according to the preceding claims, wherein the wiring (120) comprises a charging connector connectable to the energy source.

8. Window lift system (1000) for vehicle doors, wherein the window lift system (1000) comprises:
- the inductively coupled electric charging device (100) according to claims 1 to 7,
- an active system (1010) comprising an active glass window (1020),
- to a drag car (1060) of the active glass window (1020), and
- a rail (1050) on which said active glass window (1020) moves by means of the drag car (1060).

9. Window lift system (1000) for vehicle doors according to claim 8, wherein the receiver coil (130) is connected:
- to the drag car (1060) of the active glass window (1020); or
- to the active glass window (1020) of the active system (1010).

10. Window lift system (1000) for vehicle doors according to claims 8 or 9, wherein the transmitter coil is connected to said rail (1050).
